# EUROPEAN PATENT APPLICATION

(11) **EP 4 836 479 A1**
(43) Date of publication of application: **04.11.2026**
(21) Application number: 23962703.7
(22) Date of filing: 28.12.2023
(51) Int. Cl.: H04W 12/37

(54) **METHOD FOR GENERATING SECURITY POLICY, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: GAN, Lu, Chang'an Dongguan, Guangdong 523860 (CN); FU, Yulong, Chang'an Dongguan, Guangdong 523860 (CN); CAO, Jin, Chang'an Dongguan, Guangdong 523860 (CN); YI, Wei, Chang'an Dongguan, Guangdong 523860 (CN); WEI, Tenglong, Chang'an Dongguan, Guangdong 523860 (CN); LI, Hui, Chang'an Dongguan, Guangdong 523860 (CN)
(74) Representative: Mewburn Ellis LLP
(86) International application number: PCT/CN2023/142889
(87) International publication number: WO 2025/138024

(57) **Abstract**

The disclosure provides a method for security policy generation and a communication device. The method includes the following. A security policy network element generates a security policy, where the security policy is associated with a service of a terminal device. The security policy network element sends the security policy to a policy enforcement network element.

## Description

### TECHNICAL FIELD

The disclosure relates to the field of communication technologies, and more particularly, to a method for security policy generation and a communication device.

### BACKGROUND

To ensure security of a communication system, a device in the communication system may use a security policy for communication. The security policy may be generated by a network element such as a security policy network element in a zero trust architecture.

Currently, the security policy network element generates a security policy based on network status. However, with continuous evolution of the communication system, this generation manner can no longer meet security requirements of the communication system.

### SUMMARY

The disclosure provides a method for security policy generation and a communication device. Several aspects involved in the disclosure are described in detail below.

In a first aspect, a method for security policy generation is provided. The method includes the following. A security policy network element generates a security policy, where the security policy is associated with a service of a terminal device. The security policy network element sends the security policy to a policy enforcement network element.

In a second aspect, a method for security policy generation is provided. The method includes the following. A policy enforcement network element sends a first request message to a first network element, where the first request message is used for requesting a security policy, the security policy is associated with a service of a terminal device, and the first network element includes a security policy network element and/or a policy detection network element. The policy enforcement network element receives the security policy from the security policy network element.

In a third aspect, a method for security policy generation is provided. The method includes the following. A policy detection network element receives a first request message from a policy enforcement network element, where the first request message is used for requesting a security policy. In response to the first request message, the policy detection network element generates a security requirement corresponding to a service of a terminal device. The policy detection network element sends the security requirement to a security policy network element, where the security requirement is used for the security policy network element to generate the security policy.

In a fourth aspect, a method for security policy generation is provided. The method includes the following. A terminal device sends first indication information to a policy enforcement network element, where the first indication information indicates that a service of the terminal device changes. The terminal device receives a security policy from the policy enforcement network element, where the security policy is associated with the service of the terminal device.

In a fifth aspect, a communication device is provided. The communication device is a security policy network element. The communication device includes a generation unit and a sending unit. The generation unit is configured to generate a security policy, where the security policy is associated with a service of a terminal device. The sending unit is configured to send the security policy to a policy enforcement network element.

In a sixth aspect, a communication device is provided. The communication device is a policy enforcement network element. The communication device includes a sending unit and a receiving unit. The sending unit is configured to send a first request message to a first network element, where the first request message is used for requesting a security policy, the security policy is associated with a service of a terminal device, and the first network element includes a security policy network element and/or a policy detection network element. The receiving unit is configured to receive the security policy from the security policy network element.

In a seventh aspect, a communication device is provided. The communication device is a policy detection network element. The communication device includes a receiving unit, a generation unit, and a sending unit. The receiving unit is configured to receive a first request message from a policy enforcement network element, where the first request message is used for requesting a security policy. The generation unit is configured to generate, in response to the first request message, a security requirement corresponding to a service of a terminal device. The sending unit is configured to send the security requirement to a security policy network element, where the security requirement is used for the security policy network element to generate the security policy.

In an eighth aspect, a communication device is provided. The communication device is a terminal device. The communication device includes a sending unit and a receiving unit. The sending unit is configured to send first indication information to a policy enforcement network element, where the first indication information indicates that a service of the terminal device changes. The receiving unit is configured to receive a security policy from the policy enforcement network element, where the security policy is associated with the service of the terminal device.

With continuous evolution of the communication system, service scenarios in the communication system are becoming increasingly diverse. In the disclosure, a security policy associated with a service of a terminal device can be generated, such that the generated security policy can match the service of the terminal device, so as to meet security requirements of the communication system.

### BRIEF DESCRIPTION OF THE DRAWINGS

FIG. 1 illustrates a wireless communication system 100 to which embodiments of the disclosure are applied.
FIG. 2 is a schematic structural diagram of a conventional zero trust architecture.
FIG. 3 is a schematic structural diagram of an intelligent zero trust architecture.
FIG. 4 is a schematic flowchart of a method for security policy generation provided in embodiments of the disclosure.
FIG. 5 is another schematic flowchart of a method for security policy generation provided in embodiments of the disclosure.
FIG. 6 is another schematic flowchart of a method for security policy generation provided in embodiments of the disclosure.
FIG. 7 is another schematic flowchart of a method for security policy generation provided in embodiments of the disclosure.
FIG. 8 is a schematic structural diagram of a zero trust architecture provided in embodiments of the disclosure.
FIG. 9 is another schematic structural diagram of a zero trust architecture provided in embodiments of the disclosure.
FIG. 10 is a schematic flowchart of security policy generation provided in embodiments of the disclosure.
FIG. 11 is another schematic flowchart of security policy generation provided in embodiments of the disclosure.
FIG. 12 is a schematic block diagram of a communication device provided in embodiments of the disclosure.
FIG. 13 is another schematic block diagram of a communication device provided in embodiments of the disclosure.
FIG. 14 is another schematic block diagram of a communication device provided in embodiments of the disclosure.
FIG. 15 is another schematic block diagram of a communication device provided in embodiments of the disclosure.

### DETAILED DESCRIPTION

The following will describe technical solutions of the disclosure with reference to the accompanying drawings.

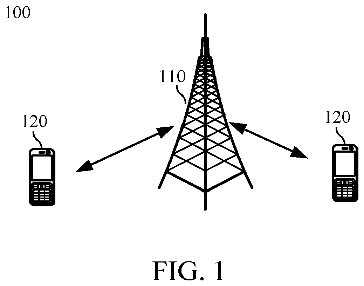

FIG. 1 is a wireless communication system 100 to which embodiments of the disclosure are applied. The wireless communication system 100 may include a network device 110 and a terminal device 120. The network device 110 may be a device that communicates with the terminal device 120. The network device 110 can provide a communication coverage for a specific geographical area and communicate with the terminal device 120 located in the coverage area.

FIG. 1 exemplarily illustrates one network device and two terminal devices. Optionally, the wireless communication system 100 may also include multiple network devices, and there can be other quantities of terminal devices in a coverage area of each of the network devices. Embodiments of the disclosure are not limited in this regard.

Optionally, the wireless communication system 100 may further include other network entities such as a network controller, a mobility management entity, or the like, and embodiments of the disclosure are not limited in this regard.

It should be understood that, technical solutions of embodiments of the disclosure are applicable to various communication systems, for example, a 5th generation (5G) system or a new radio (NR) system, a long term evolution (LTE) system, an LTE frequency division duplex (FDD) system, an LTE time division duplex (TDD) system, or the like. The technical solutions provided in the disclosure may also be applied to future communication systems, such as a 6th generation (6G) mobile communication system, or a satellite communication system, and so on.

The terminal device in embodiments of the disclosure may also be referred to as a user equipment (UE), an access terminal, a subscriber unit, a subscriber station, a mobile station, a mobile station (MS), a mobile terminal (MT), a remote station, a remote terminal, a mobile device, a user terminal, a terminal, a wireless communication device, a user agent, or a user device. The terminal device in embodiments of the disclosure may refer to a device that provides voice and/or data connectivity to a user, and may be used for connecting people, things, and machines, for example, a handheld device or an in-vehicle device with a wireless connection function. The terminal device in embodiments of the disclosure may be a mobile phone, a tablet computer (Pad), a laptop computer, a palmtop computer, a mobile internet device (MID), a wearable device, a virtual reality (VR) device, an augmented reality (AR) device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like. Optionally, the UE may be configured to function as a base station. For example, the UE may be configured to function as a scheduling entity that provides sidelink signals between UEs in vehicle-to-everything (V2X) or device-to-device (D2D) communications. For example, a cellular phone and a vehicle communicate with each other by using sidelink signals. A cellular phone and a smart home device communicate with each other without relaying communication signals through a base station.

The network device in embodiments of the disclosure may be a device configured to communicate with a terminal device. The network device may also be referred to as an access network device or a radio access network device. For example, the network device may be a base station. The network device in embodiments of the disclosure may refer to a radio access network (RAN) node (or device) that accesses a terminal device to a wireless network. The base station may broadly cover various names as follows, or be replaced with the following names, such as: a Node B (NodeB), an evolved Node B (eNB), a next generation Node B (gNB), a relay station, a transmitting and receiving point (TRP), a transmitting point (TP), a master Node B (MeNB), a secondary Node B (SeNB), a multi-standard radio (MSR) node, a home base station, a network controller, an access node, a radio node, an access point (AP), a transmission node, a transceiver node, or the like. The base station may be a macro base station, a micro base station, a relay node, a donor node, or the like, or a combination thereof. The base station may also refer to a communication module, a modem, or a chip configured in the foregoing device or apparatus. The base station may also be a mobile switching center, a device that function as a base station in device-to-device (D2D), V2X, machine-to-machine (M2M) communications, a network-side device in a 6G network, a device that function as a base station in a future communication system, or the like. The base station may support networks of the same or different access technologies. Embodiments of the disclosure are not limited in terms of specific technologies and specific device forms adopted by the network device.

The base station may be fixed or mobile. For example, a helicopter or an unmanned aerial vehicle may be configured to function as a mobile base station, and one or more cells may move according to the location of the mobile base station. In other examples, the helicopter or the unmanned aerial vehicle may be configured to function as a device that communicates with another base station.

In some deployments, the network device in embodiments of the disclosure may refer to a CU or a DU, or the network device includes a CU and a DU. The gNB may further include an AAU.

The network device and the terminal device may be deployed on land, including indoor or outdoor, handheld or in-vehicle, on water, or in the air on an airplane, a balloon, or a satellite. Embodiments of the disclosure are not limited in terms of scenarios in which the network device and the terminal device are located.

It should be understood that, all or some functions of the communication device in the disclosure may also be implemented by software functions running on hardware, or implemented by virtualization functions instantiated on a platform (such as a cloud platform).

### Zero Trust Architecture

A zero trust architecture (ZTA) may be a national institute of standards and technology (NIST) zero trust architecture. The zero trust architecture aims to ensure secure access to network resources by implementing strict access control and monitoring to respond to a constantly changing threat environment. This architecture is designed to improve security, reduce reliance on traditional network boundaries, and ensure that data and resources remain secure even in highly dynamic and decentralized network environments. The concept of the zero trust architecture is that every request in the network is not trusted by default, and every access requires strict authorization and monitoring.

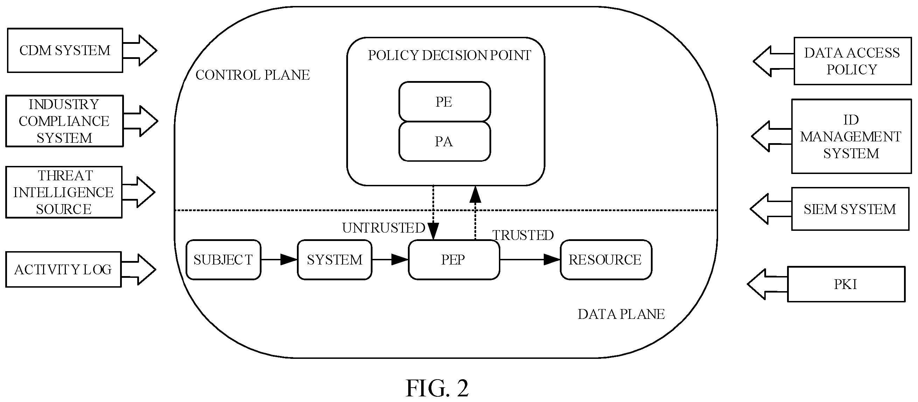

Referring to FIG. 2, network elements or components in the NIST zero trust architecture may include a policy engine (PE), a policy administrator (PA), and a policy enforcement point (PEP).

The policy engine is responsible for making a final decision on resource access for a given subject. The policy engine may use enterprise policies and inputs from external sources, such as continuous diagnostics and mitigation (CDM) systems, threat intelligence services, as inputs to a trust algorithm, so as to authorize, deny, or revoke access to resources. The policy engine and the policy administrator may be used in coordination with each other. The policy engine may make a decision and record a decision result (approval or denial). The policy administrator may execute the decision.

The policy administrator may be responsible for establishing and/or closing a communication path between a subject and a resource. For example, the policy administrator may send a command to the policy enforcement point to establish or close a communication path between a subject and a resource. In some implementations, the policy administrator may communicate with the policy enforcement point to create a communication path. Communication between the policy administrator and the policy enforcement point may be over a control plane.

The policy administrator may generate a session-specific authentication token or credential that a client can use to access enterprise resources. The policy administrator is closely related to the policy engine, and the policy administrator may allow or deny a session based on a decision made by the policy engine. If a session is authorized and the request is authenticated, the policy administrator may send a command to the policy enforcement point to allow the session to begin. If a session is denied or a previous approval is revoked, the policy administrator may send a command to the policy enforcement point to close the connection.

In some implementations, the policy administrator and the policy engine are two independent components, or the policy administrator and the policy engine are integrated on one component.

The policy enforcement point may be responsible for enabling, monitoring, and terminating a connection between a subject and a resource. The policy enforcement point may communicate with the policy administrator. The policy enforcement point may forward a request and/or receive a policy update from the policy administrator.

In the zero trust architecture, the policy enforcement point is one single logical component, or the policy enforcement point may alternatively be divided into two components. For example, the policy enforcement point may include a client side and a resource side. The client side may be, for example, an agent on the terminal device, and the resource side may be, for example, a resource front-end gateway (GW) component that controls access.

These components may communicate over a separate control plane, while application data may be transmitted on a data plane.

Continuing to refer to FIG. 2, the zero trust architecture may further include other components. For example, the zero trust architecture may further include one or more of: a CDM system, an industry compliance system, a threat intelligence source, network and system activity logs, a data access policy, an identity (ID) management system, a security information and event management (SIEM) system, or an enterprise public key infrastructure (PKI).

### Intelligent Zero Trust Architecture

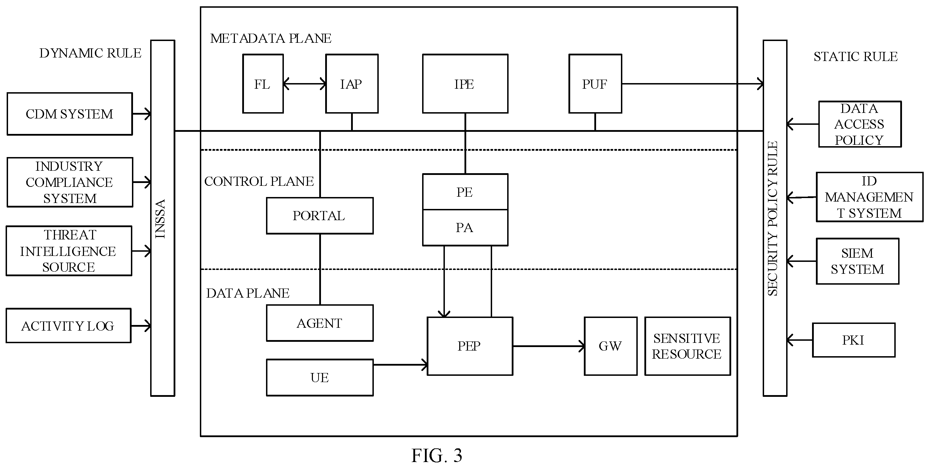

Referring to FIG. 3, components in an intelligent zero trust architecture (i-ZTA) may include an intelligent policy engine (IPE) and an intelligent agent portal (IAP).

The IPE may be responsible for dynamically authorizing access requests. The IPE may maximize an assurance score by using reinforcement learning algorithms, i.e., evaluating and adjusting a trust policy in response to a real-time observed user or device behavior, a network resource access event, and a newly detected anomalous behavior. The IAP may support federated learning (FL). The federated learning method is a distributed learning method that shares and updates models among multiple agents to provide a comprehensive network environment model.

Continuing to refer to FIG. 3, the intelligent zero trust architecture may further include an intelligent network security state analysis (INSSA). The INSSA models the network by using a graph neural network (GNN) and performs risk assessment by employing adversarial learning. As such, security status of network assets can be dynamically monitored and whether the network assets comply with a security policy rule can be evaluated in real-time.

The operation procedure of the intelligent zero trust architecture involves multiple interactive layers. When a device or user attempts to access network resources, the IPE evaluates the request and decides whether to authorize it according to the current network environment and historical behavior data. If the device lacks computing capabilities, the IAP intervenes to evaluate and process the request by using a federated learning mechanism. In addition, the INSSA continuously monitors the network status to ensure that all communication behaviors comply with the security policy. The interaction of these components ensures that the security policy can be updated and enforced in real-time even when the network environment changes.

### Communication System Architecture

With development of technologies, people have increasingly higher requirements for communication systems. On the one hand, they hope that communication systems can achieve higher system performance, on the other hand, they also hope that communication systems can be minimalist systems to reduce deployment and operation costs. A feasible solution is to design multiple subsystems on a minimalist common technology core, where the multiple subsystems can be decoupled from each other, and each subsystem can be optimized individually, thereby achieving a minimalist multi-capability communication system with on-demand capability allocation and flexible function combination.

The communication system may be provided with common capabilities, such as endogenous intelligent policies, security, flexible spectrum management, and other capabilities, by one minimized minimalist core.

The communication system may be specifically optimized in four capability directions, including clouding, critical internet of things (IoT), ubiquitous IoT, and sensing.

One or more subsystems may be designed in each capability direction. In some implementations, according to application scenarios, spectrums, interface types, and the like, corresponding key technologies may be selected and hardware systems may be designed separately. For example, the subsystem may include one or more of: a broadband cellular subsystem, a D2D subsystem, an ultra-reliable low-latency communication (URLLC) subsystem, a positioning and sensing subsystem, a massive IoT subsystem, or a space-air-ground communication subsystem.

Among the subsystems, whether to maintain air interface compatibility may be determined on demand, and the extent of sharing air interface technologies and hardware designs with the broadband cellular subsystem may be determined on demand.

The communication system may replace general and complex traditional software algorithms with black-boxed, specialized artificial intelligence (AI) algorithm libraries, thereby achieving relative independence and individual optimization of each subsystem and significant simplification of communication protocols. Through switching and combination of multiple AI algorithms, switching and combination of multiple subsystems are achieved.

The communication system is applicable to any communication system, such as a 6G system or a future communication system.

To ensure security of the communication system, devices in the communication system may use a security policy for communication. The security policy may be generated by a network element in the zero trust architecture. For example, the security policy may be generated by the PE. In addition, when the security policy need to be updated, the PE may update the security policy.

Some communication systems such as 6G systems introduce various services. For example, service scenarios in the communication system may include smart home, smart wearable devices, zero-power devices, integrated sensing and communication internets, twin body area networks, intelligent interaction, intelligent agriculture, intelligent industry, super transportation, precision medicine, universal intelligent education, virtual roaming, immediate emergency rescue, unmanned area exploration, and the like. The diverse service scenarios also pose new challenges to the security of the communication system. Currently, the integration between security policies and service data in the zero trust architecture is insufficient and security requirements of different services in the communication system can no longer be met.

Taking the 6G system as an example, the 6G network environment is expected to achieve deep sensing of service data and network status, which requires security policies to seamlessly integrate with real-time service data and network status information, so as to achieve precise risk assessment and policy deployment. Although ZTA and i-ZTA consider data-driven security policy implement, they have not yet fully achieved deep integration with rich service data and network status information in the 6G network environment. Therefore, in a rapidly changing network environment, current security policies may not fully utilize real-time data for effective risk prediction and response, resulting in insufficient precision or timeliness of security responses, failing to fully leverage the potential of data-driven security policies.

For the NIST zero trust architecture, generation or updating of security policies relies on a preset condition and manual intervention, showing passive and lagging characteristics in deployment and adjustment of security policies, and cannot meet dynamically changing service requirements. For example, the security policy is updated or a new security policy is generated only when the preset condition is met. For another example, when the security policy need to be updated, manual update is always performed. Although i-ZTA introduces intelligent components, i-ZTA does not integrate with service data but only updates the security policy based on a change in the network environment.

To solve one or more of the above problems, embodiments of the disclosure provide a method for security policy generation. By associating a security policy with a service of a terminal device, the security policy associated with the service of the terminal device can be generated during security policy generation, thereby meeting security requirements of different services in the communication system.

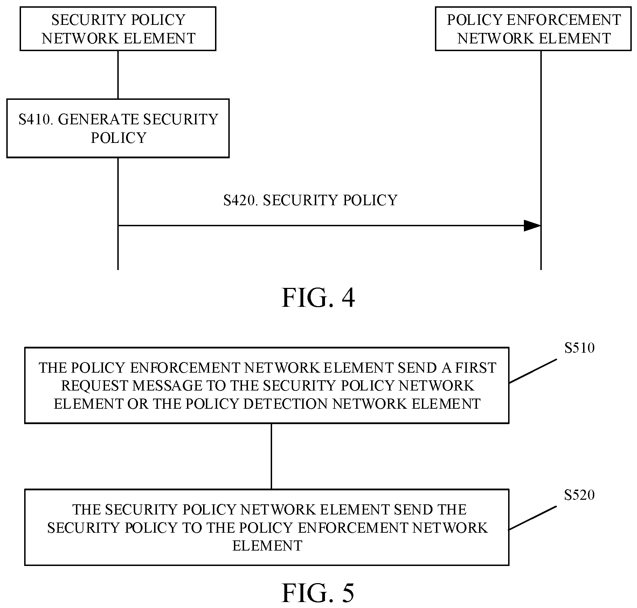

The solution of embodiments of the disclosure is described in detail below with reference to FIG. 4.

Referring to FIG. 4, at S410, a security policy network element generates a security policy. The security policy network element may be, for example, a PE. In some embodiments, the security policy network element may be an AI Sec PE.

It should be noted that, in some implementations, the security policy network element may be replaced with another term. For example, the security policy network element may be replaced with a policy engine or a policy engine network element.

In some embodiments, the security policy may be associated with a service of a terminal device. For example, the security policy network element may generate, based on a service of the terminal device, a security policy corresponding to the service. In some implementations, different services may correspond to different security policies. Of course, different services may correspond to the same security policy. Embodiments of the disclosure are not limited in this regard. In embodiments of the disclosure, by integrating service data with security policies, precise risk assessment and policy deployment can be achieved.

In some implementations, the security policy may be updated based on a change in the service of the terminal device, so as to improve real-time performance of the security policy. For example, the security policy network element may update the security policy when the service of the terminal device changes. By triggering update of the security policy upon the change in the service of the terminal device, the security policy can respond to the change in the service in real-time, so as to meet latency requirements of the communication system. Taking the 6G system as an example, the 6G network is expected to support a higher data rate and a lower latency, which means the network environment and the service requirement will be more dynamic and variable. In embodiments of the disclosure, by updating the security policy based on the change in the service of the terminal device, it is possible to respond to the dynamic change in the service in real-time and generate the security policy corresponding to the service of the terminal device.

Whether the service of the terminal device changes may be detected by the policy enforcement network element. In some embodiments, the policy enforcement network element may detect whether the service of the terminal device changes. When the service of the terminal device changes, the policy enforcement network element may send indication information to the security policy network element to indicate that the service of the terminal device changes. In some implementations, when the service of the terminal device changes, the policy enforcement network element may send a first request message to the security policy network element, as illustrated at S510 in FIG. 5, where the first request message is used for requesting the security policy. After receiving the first request message, the security policy network element may generate the security policy.

Embodiments of the disclosure are not limited in terms of the policy enforcement network element. The policy enforcement network element may also be referred to as a service function network element. The policy enforcement network element may be a PEP. In some implementations, the policy enforcement network element may include one or more of: an application function (AF), a network exposure function (NEF), a network repository function (NRF), a policy control function (PCF), an access and mobility management function (AMF), an authentication server function (AUSF), a base station, a user plane function (UPF), an edge node, or the like.

In some embodiments, the security policy may be updated based on a change in network status. For example, the security policy network element may update the security policy or generate a new security policy when the network status changes. By integrating the security policy with network status information, precise risk assessment and policy deployment can be achieved.

In some implementations, the policy enforcement network element may send the first request message to the security policy network element through a policy management network element. For example, the policy enforcement network element may send the first request message to the policy management network element, and after receiving the first request message, the policy management network element may forward the first request message to the security policy network element.

The policy management network element in embodiments of the disclosure may be a PA.

Embodiments of the disclosure are not limited in terms of the manner in which the policy enforcement network element determines whether the service of the terminal device changes. As an example, the policy enforcement network element may monitor the service of the terminal device to determine whether the service of the terminal device changes. As another example, the terminal device may send first indication information to the policy enforcement network element when the service changes, where the first indication information indicates that the service of the terminal device changes. That is, the policy enforcement network element may determine whether the service of the terminal device changes based on an indication from the terminal device.

In some embodiments, although the service of the terminal device changes, the security policies required for the service before and after the change may be the same. In this case, the security policy network element may not generate or update the security policy, so as to reduce overhead. That is, before generating the security policy, the security policy network element may determine whether the security policy needs to be generated, for example, whether a new security policy is needed or whether the security policy needs to be updated. If the security policy needs to be generated, the security policy network element generates the security policy. If the security policy does not need to be generated, the security policy network element may not generate the security policy. For example, if the security policy network element determines that a new security policy is needed, the security policy network element generates the new security policy. If the security policy network element determines that a new security policy is not needed, the security policy network element may not generate the new security policy. Alternatively, if the security policy network element determines that the security policy needs to be updated, the security policy network element updates the security policy. If the security policy network element determines that the security policy does not need to be updated, the security policy network element may not update the security policy.

In some embodiments, the change in the service may include one or more of: addition of a new service, or a change in a current service condition.

In some embodiments, the security policy network element may generate the security policy based on a first model. The first model may be any neural network model. For example, the first model may be an AI model or a machine learning (ML) model. In some implementations, the first model may be a deep forest model.

Deep forest (DF) is a decision tree ensemble method with a cascade structure, including multi-granularity scanning and cascade forest. In the multi-granularity scanning, a new feature vector is generated by scanning an original input feature with sliding windows of different granularities. In the cascade forest, an output from a previous cascade and the original input feature are processed to generate input data of a next cascade. In the disclosure, measure-aware feature reuse (MAFR) and measure-aware layer growth (MALG) may be employed to achieve multi-label output task objectives of deep forest. In the MAFR, an input of a next cascade is selected based on confidence of an output from a previous cascade. In the MALG, whether cascade layer training ends is determined according to an optimal evaluation metric. Since the deep forest model has a high training speed and can be easily parallelized to process large-scale datasets, using the deep forest model to generate the security policy can improve the generation speed of the security policy and ensure the accuracy of security policy.

In some embodiments, an input parameter of the first model may include a system type. The system type may be a system type corresponding to the service of the terminal device, or the system type may be determined based on the service of the terminal device. By using the system type as the input parameter of the first model, the generated security policy can correspond to the system type, thereby meeting security requirements of different systems. For example, when the system type changes, the security policy network element may generate a new security policy or update the security policy.

In some implementations, the system type may also be referred to as a system capability. The system type may be, for example, a system capability or a subsystem capability in a 6G system.

In some implementations, the communication system may include one or more of: a broadband cellular system, a D2D system, a URLLC system, a positioning and sensing system, a massive IoT system, or a space-air-ground communication system. In other implementations, the communication system may include one or more of: an integrated sensing and communication (ISAC) system, a zero-power communication system, a terahertz system, an AI/ML system, a reconfigurable intelligent surface (RIS) system, a multiple-input multiple-output (MIMO) system, or the like.

Taking the communication system including a zero-power communication system as an example, since the computing capability of the zero-power communication system is limited, the zero-power communication system needs to complete security functions under resource-constrained conditions. For example, the terminal device needs to enforce the security policy with less resource consumption. Based on this, the security policy of the zero-power communication system may include one or more of the following sub-policies: lightweight security credential management, lightweight authentication, or physical layer key protection.

In some embodiments, an input parameter of the first model may include a security requirement. The security requirement may be a security requirement corresponding to the service of the terminal device, or the security requirement may be determined based on the service of the terminal device. By using the security requirement as the input parameter of the first model, the generated security policy can correspond to the security requirement, thereby generating security policies under different security requirements. For example, when the security requirement changes, the security policy network element may generate a new security policy or update the security policy.

In some embodiments, the security requirement may include multiple sub-requirements. The multiple sub-requirements may be combined with each other to form a final security requirement. By dividing the security requirement into multiple sub-requirements, the sub-requirements can be flexibly combined according to a service requirement of the terminal device, so as to meet the service requirement of the terminal device, thereby achieving more flexible security policy generation.

In some embodiments, the security requirement may include security requirements of different protocol layers. For example, the security requirement may include one or more of: a non-access stratum security requirement, a radio resource control (RRC) layer security requirement, a physical layer security requirement, or an application layer security requirement. The non-access stratum security requirement may include one or more of: authentication and key agreement, data confidentiality, data integrity, or exception handling mechanisms. The RRC layer security requirement may include one or more of: data confidentiality, data integrity, security mode command setting, sequence number synchronization mechanisms, or exception handling mechanisms. The physical layer security requirement may include one or more of: encryption, channel coding and modulation, or physical layer authentication and fingerprint recognition. The application layer security requirement may include one or more of: network slicing security, user privacy protection, or security of open interfaces.

In some embodiments, the security requirement may include one or more of the following sub-requirements: service domain, data type, data flow direction, security level, network environment, interaction mode, service priority, latency requirement, privacy level, ID and authorization mechanism, network isolation degree, encryption key strength, or the like.

In some embodiments, different security requirements may correspond to different security policies. Taking the security level as an example, different security levels may correspond to different encryption strengths and strictness of access control. Taking the data type as an example, different data types, such as user data, machine data, and model data, may require different protection levels and processing manners.

In some embodiments, the sub-requirements in the security requirement may be sub-requirements in a security requirement list. In other words, the security requirement may include multiple sub-requirements in the security requirement list. The security requirement list may be a predefined security requirement list. By selecting a security requirement from the security requirement list, determination of the security requirement can be simplified, making the generated security requirement more standardized, thereby reducing the difficulty of security policy generation.

In some implementations, the security requirement list may be used as an input of the first model. The first model may establish a correspondence between services of the terminal device and sub-requirements, and may select a corresponding sub-requirement based on the service of the terminal device.

In some embodiments, the security policy may include multiple sub-policies. In other words, the security policy may be composed of multiple sub-policies. Through the design of sub-policies, during security policy generation, different sub-policies can be flexibly combined according to service needs of the terminal device, thereby improving flexibility in security policy generation.

In some embodiments, the security policy may include multiple sub-policies, and the multiple sub-policies may correspond to multiple sub-requirements respectively. In other words, the multiple sub-policies may be in one-to-one correspondence with the multiple sub-requirements. One sub-policy corresponds to one sub-requirement. During security policy generation, for multiple sub-requirements, multiple sub-policies corresponding to the multiple sub-requirements may be generated respectively, and the multiple sub-policies can be combined to form a final security policy.

For example, assuming the security requirements include lightweight authentication, distributed security, data authorization, and low-layer security protection, the generated security policy may include a sub-policy corresponding to lightweight authentication, a sub-policy corresponding to distributed security, a sub-policy corresponding to data authorization, and a sub-policy corresponding to low-layer security protection.

In some embodiments, an input parameter of the first model may include a security capability. The security capability may be a security capability corresponding to the service of the terminal device, or the security capability may be determined based on the service of the terminal device. In some embodiments, the security capability may also be referred to as a security function. By using the security capability as the input parameter of the first model, the generated security policy can correspond to the security capability, thereby meeting security requirements of different security capabilities. For example, when the security capability changes, the security policy network element may generate a new security policy or update the security policy.

In some implementations, the security capability may also be referred to as a security mechanism or a 3rd generation partnership project (3GPP) security mechanism.

In some implementations, the security capability may include multiple sub-capabilities. In other words, the security capability may be a modularized security capability. By modularizing the security capability, during security policy generation, different security modules can be quickly selected and combined according to specific security requirements, so as to effectively achieve a predetermined security policy.

In some implementations, the sub-capabilities may be sub-capabilities in a security capability library. The security capability library may be, for example, a 3GPP security capability library. The security capability library includes multiple sub-capabilities. During security policy generation, a corresponding sub-capability may be selected according to actual service needs.

In some implementations, the security capability library may also be referred to as a modularized security capability library.

In some implementations, the security capability library may be used as an input of the first model. The first model may establish a correspondence between services of the terminal device and sub-capabilities, and may select a corresponding sub-capability based on the service of the terminal device.

For example, the security capability or the security capability library may include one or more of the following sub-capabilities: 128-bit key, authentication and key agreement (AKA), ID-based authorization, PKI, quantum-resistant key, distributed authentication, attribute-based authorization, authorization (Oauth), physical layer key, lightweight authentication, data-based authorization, blockchain, or the like.

In some embodiments, the AKA may include one or more of: 5G-AKA, AES-AKA, EAP-AKA, BEST-AKA, EPS-AKA, EAP-TLS, EAP-AKA', or the like.

It can be understood that, the finer the granularity of sub-capability division, the more flexible the combination of sub-capabilities, and the better the generated security policy conforms to service requirements of the terminal device.

In some embodiments, the security capability may span multiple security domains from the physical layer to the application layer. The security capability may include various mechanisms such as authentication, authorization, data encryption, integrity verification, and replay attack protection.

In some implementations, the security capability may include security capabilities corresponding to security requirements. For example, the security capability may include security capabilities of different protocol layers. For example, the security capability may include one or more of: a non-access stratum security capability, an RRC layer security capability, a physical layer security capability, or an application layer security capability. The non-access stratum security capability may include security capabilities corresponding to one or more of the following security requirements: authentication and key agreement, data confidentiality, data integrity, or exception handling mechanisms. The RRC layer security capability may include security capabilities corresponding to one or more of the following security requirements: data confidentiality, data integrity, security mode command setting, sequence number synchronization mechanisms, or exception handling mechanisms. The physical layer security capability may include security capabilities corresponding to one or more of the following security requirements: encryption, channel coding and modulation, or physical layer authentication and fingerprint recognition. The application layer security capability may include security capabilities corresponding to one or more of the following security requirements: network slicing security, user privacy protection, or security of open interfaces.

In some implementations, taking the non-access stratum as an example, the security capability corresponding to authentication and key agreement may include one or more of: EPS-AKA, 5G-AKA, EAP-AKA, EAP-AKA', EAP-TLS, lightweight authentication protocols (such as BEST-AKA), or ultra-lightweight authentication protocols. The security capability corresponding to data confidentiality may include one or more of: EEA0, EEA1, EEA2, EEA3, NEA0, NEA1, or NEA2. The security capability corresponding to data integrity may include one or more of: EIA0, EIA1, EIA2, EIA3, NEA0, NEA1, or NEA2. The security capability corresponding to exception handling mechanisms may include one or more of: authentication exception handling, network failure and recovery, security mode command error handling, or distributed denial of service (DDOS) handling.

In some implementations, taking the RRC layer as an example, the security capability corresponding to data confidentiality may include one or more of: EEA0, EEA1, EEA2, EEA3, NEA0, NEA1, or NEA2. The security capability corresponding to data integrity may include one or more of: EIA0, EIA1, EIA2, EIA3, NEA0, NEA1, or NEA2. The security capability corresponding to security mode command setting may include specifying an encryption algorithm and/or an integrity algorithm to be used. The security capability corresponding to exception handling mechanisms may include one or more of: security mode failure, connection loss, or re-establishment loss.

In some implementations, taking the physical layer as an example, the security capability corresponding to encryption may include data scrambling. The security capability corresponding to channel coding and modulation may include one or more of: low-density parity-check (LDPC), Turbo codes, or polar codes. The security capability corresponding to physical layer authentication and fingerprint recognition may include one or more of: device-specific radio frequency feature recognition, time and frequency analysis, signal waveform analysis, or environment and channel characteristics.

In some implementations, taking the application layer as an example, the security capability corresponding to network slicing security may include one or more of: slice isolation or slice secondary authentication. The security capability corresponding to user privacy protection may include one or more of: subscription concealed identifier (SUCI), temporary mobile subscriber identity (TMSI), globally unique temporary UE identity (GUTI) (such as 5G-GUTI), user consent, or subscriber data management and exposure. The security capability corresponding to security of open interfaces may include one or more of: OAuth 2.0, OpenID Connect, or authentication and key management for applications (AKMA).

Through modularized security capability design, the security capability can be compatible with security mechanisms of different communication networks (such as 4G networks, 5G networks, etc.) and provide necessary scalability for future network environments, thereby ensuring that security measures provided in embodiments of the disclosure remain forward-looking and flexible as network technologies develop.

In some embodiments, the security capability may include multiple sub-capabilities, the security policy may include multiple sub-policies, and the multiple sub-policies may correspond to the multiple sub-capabilities respectively. In other words, the multiple sub-policies may be in one-to-one correspondence with the multiple sub-capabilities. One sub-policy corresponds to one sub-capability. During security policy generation, for multiple sub-capabilities, multiple sub-policies corresponding to the multiple sub-capabilities may be generated respectively, and the multiple sub-policies can be combined to form a final security policy.

Taking the service of the terminal device being an industrial internet service as an example, an industrial internet needs to consider data collection and processing at different locations throughout the entire industry chain. Therefore, the required security capability may include distributed authentication and data-based authorization. During security policy generation, a sub-policy corresponding to distributed authentication and a sub-policy corresponding to data-based authorization may be generated.

In some embodiments, to enable the security policy to adapt to the dynamic change in the network, an input parameter of the first model may include a security rule and/or a security posture. The security posture may include a system security posture and/or a network security posture. The security posture may include, for example, one or more of: network behavior monitoring, security operation and maintenance management, or system event logs.

The security rule may include compliance requirements and/or threat analysis. In some implementations, the security rule may include a static rule and/or a dynamic rule. The static rule may include a rule set that does not change frequently. The static rule may include one or more of: a data access policy, public key infrastructure, an ID management rule, or a configuration of security information and event management. The dynamic rule may include one or more of: real-time feedback of data monitoring, compliance detection, threat intelligence updates, or activity logs. This information helps the core network understand the current security environment and events occurring.

When the security rule and/or the security posture changes, the security policy network element may update the security policy or generate a new security policy, such that the generated security policy can adapt to rapidly changing network environments and newly emerging threats.

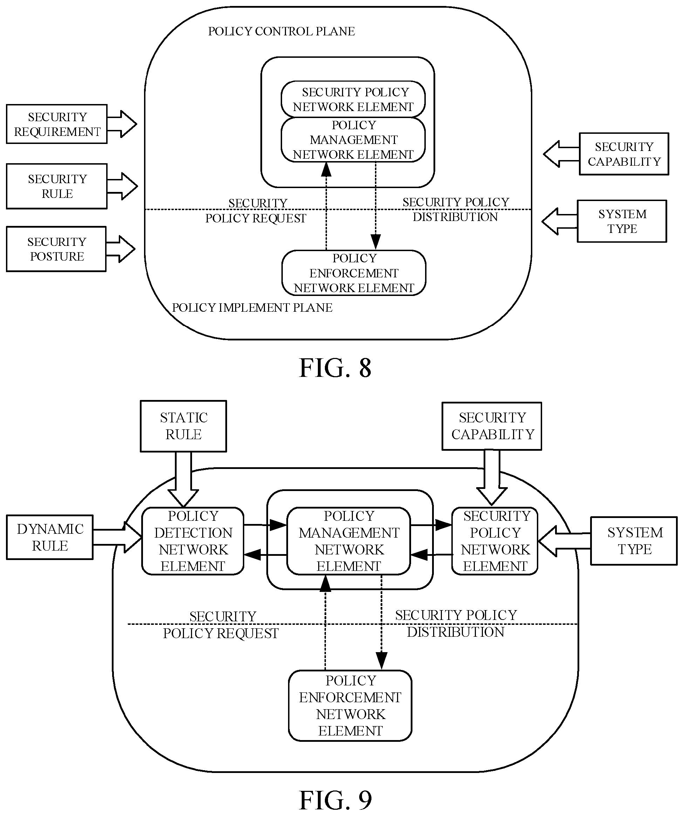

The input parameter of the first model may include any one of the above parameters, or the input parameter of the first model may include multiple of the above parameters. For example, the input parameter of the first model may include a system type, a security requirement, a security capability, a security rule, and a security posture, as illustrated in FIG. 8. For another example, the input parameter of the first model may include a system type, a security requirement, and a security capability, as illustrated in FIG. 9.

Embodiments of the disclosure are not limited in terms of the manner of determining the security requirement. As an example, the security requirement may be a predefined security requirement. The security requirement may be determined manually by staff. After determining the security requirement, the staff may input the security requirement into the first model. In some implementations, the staff may determine the security requirement based on a security requirement list. For example, the staff may select one or more sub-requirements from the security requirement list according to the service of the terminal device, so as to form a final security requirement.

As another example, the security requirement may be generated based on a second model. Generating the security requirement through the second model can make generation of the security requirement more intelligent.

The second model may be any neural network model. For example, the second model may be an AI model or an ML model. In some implementations, the second model may be a deep forest model.

In some implementations, the security requirement may be generated by a network element other than the security policy network element. For example, the security requirement may be generated by a policy detection network element. The policy detection network element may be, for example, a policy detection (PD). By generating the security policy through another network element, flexibility and dynamic adaptability of security policy generation can be improved.

In some implementations, the policy detection network element may generate the security requirement based on the second model. After generating the security requirement, the policy detection network element may send the security requirement to the security policy network element, as illustrated in FIG. 9. In some implementations, the policy detection network element may send the security requirement to the security policy network element through a policy management network element.

After receiving the security requirement from the policy detection network element, the security policy network element may determine that the service of the terminal device changes. In this case, the security policy network element may generate the security policy.

In some embodiments, an input parameter of the second model may include one or more of: a security rule or service data. The service data may include one or more of: network traffic, device status, or a quality of service (QoS) parameter. Changes in the service data may reflect changes in the service requirement. For example, if the terminal device transitions from a low-security-requirement service to a high-security-requirement service, the corresponding service data will also change.

The security rule may include a static rule and/or a dynamic rule. The static rule may include a rule set that does not change frequently. The static rule may include one or more of: a data access policy, public key infrastructure, an ID management rule, or a configuration of security information and event management. The dynamic rule may include one or more of: real-time feedback of data monitoring, compliance detection, threat intelligence updates, or activity logs. This information helps the core network understand the current security environment and events occurring.

An output of the policy detection network element or the second model includes the security requirement. The security requirement may be generated based on the service data and/or the security rule. The security requirement may be a security requirement in a security requirement list. The policy detection network element may have an intelligent analysis and prediction function, and may process and interpret input data by using the second model and data analysis technologies, so as to generating an accurate security requirement.

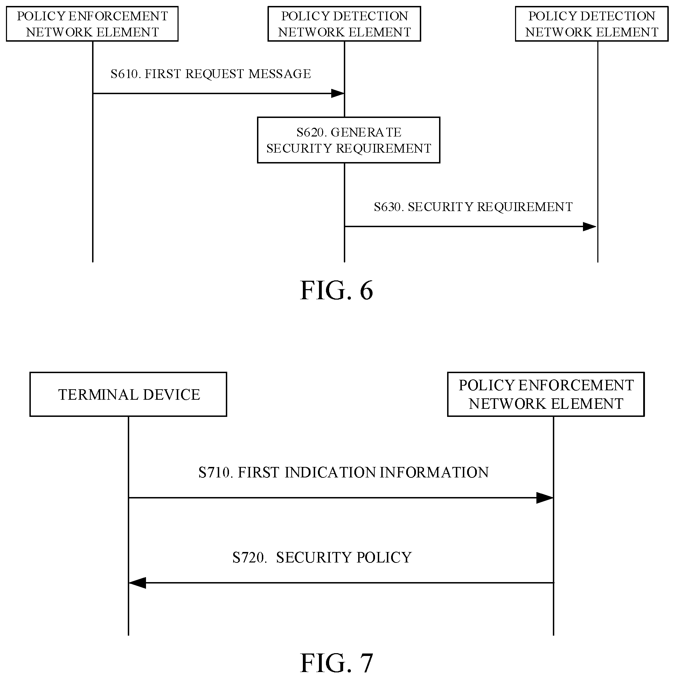

In some embodiments, the policy detection network element may generate the security requirement when the service of the terminal device changes. In some implementations, the policy enforcement network element may detect whether the service of the terminal device changes. When the service of the terminal device changes, the policy enforcement network element may send a first request message to the policy detection network element, as illustrated at S510 in FIG. 5 or S610 in FIG. 6, where the first request message is used for requesting the security policy. In response to the first request message, the policy detection network element generates the security requirement, as illustrated at S620 in FIG. 6. For example, the policy detection network element may generate the security requirement based on the second model. After generating the security requirement, the policy detection network element may send the security requirement to the security policy network element, as illustrated at S630 in FIG. 6.

In some implementations, the policy enforcement network element may send the first request message to the policy detection network element through the policy management network element. For example, the policy enforcement network element may send the first request message to the policy management network element, and after receiving the first request message, the policy management network element may forward the first request message to the policy detection network element.

Embodiments of the disclosure are not limited in terms of the manner in which the policy enforcement network element determines whether the service of the terminal device changes. As an example, the policy enforcement network element may monitor the service of the terminal device to determine whether the service of the terminal device changes. As another example, the terminal device may send first indication information to the policy enforcement network element when the service changes, as illustrated at S710 in FIG. 7, where the first indication information indicates that the service of the terminal device changes. That is, the policy enforcement network element may determine whether the service of the terminal device changes based on an indication from the terminal device.

In some embodiments, the policy detection network element may generate the security requirement according to an indication from the security policy network element. For example, the security policy network element may determine whether the security policy needs to be generated or updated based on a certain rule, such as a calculated trust value. When determining that the security policy needs to be generated or updated, the security policy network element may send indication information to the policy detection network element to indicate the policy detection network element to generate a new security requirement.

A security architecture involved in embodiments of the disclosure is described below with reference to FIGs. 8 and 9.

The solution of embodiments of the disclosure may include two security architectures. One security architecture includes a security policy network element. The security policy network element may be an engine component. Therefore, this architecture may also be referred to as a single-engine architecture, as illustrated in FIG. 8. Another security architecture includes a security policy network element and a policy detection network element. Both the security policy network element and the policy detection network element may be engine components. Therefore, this architecture may also be referred to as a dual-engine architecture, as illustrated in FIG. 9. The schemes illustrated in FIGs. 8 and 9 are described below.

Referring to FIG. 8, the security policy network element may generate the security policy based on the first model. An input parameter of the first model may include one or more of: a security requirement, a security capability, a system type, a security rule, or a security posture.

Referring to FIG. 9, the policy detection network element may generate the security requirement based on the second model. The policy detection network element may send the generated security requirement to the security policy network element. An input parameter of the second model may include one or more of: service data or a security rule.

The security policy network element may generate the security policy based on the first model. An input parameter of the first model may include one or more of: a security requirement, a security capability, or a system type.

It should be noted that, in FIGs. 8 and 9, the security policy network element and the policy management network element are described as two separate network elements. However, in some embodiments, the security policy network element and the policy management network element may be integrated in one network element.

In some implementations, the security policy network element sends the security policy to the policy enforcement network element, referring to S420 in FIG. 4 and S520 in FIG. 5. After generating the security policy, the security policy network element may send the security policy to the policy enforcement network element, so that the policy enforcement network element can enforce the security policy.

In some embodiments, the security policy network element may send the security policy to the policy enforcement network element through the policy management network element. For example, the security policy network element sends the security policy to the policy management network element, and the policy management network element may forward the security policy to the policy enforcement network element.

In some embodiments, the policy enforcement network element may send the security policy to the terminal device, as illustrated at S720 in FIG. 7, so that the security policies in the terminal device and the policy enforcement network element are the same, and the terminal device and the policy enforcement network element may perform secure communication based on the same security policy. For example, the terminal device and the policy enforcement network element may use the same physical layer key for secure transmission protection.

Two specific examples are described below to elaborate on the solution of embodiments of the disclosure in detail. It should be noted that, the examples below are only for facilitating understanding and explaining the solution of embodiments of the disclosure, and embodiments of the disclosure should not be limited to the following examples.

### Example 1

The solution of Example 1 is applicable to the architecture illustrated in FIG. 8.

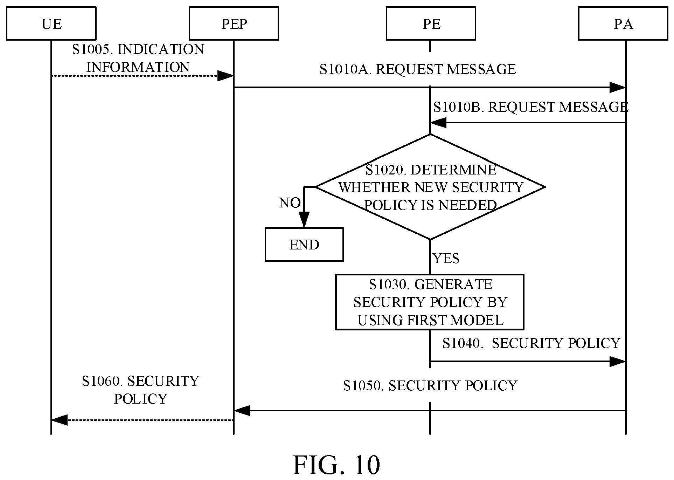

Referring to FIG. 10, at S1010, a PEP sends a request message to a PE. Before sending the request message, the PEP may determine whether a service of a terminal device changes. When the service of the terminal device changes, the PEP sends the request message to the PE, where the request message is used for requesting a security policy.

In some implementations, S1010 may include S1010a and S1010b. At S1010a, the PEP sends the request message to a PA. At S1010b, the PA forwards the request message to the PE.

In some implementations, before S1010, the method illustrated in FIG. 10 may further include S1005. At S1005, the PEP may receive indication information from a UE, where the indication information indicates that a service of the UE changes.

At S1020, the PE determines whether a new security policy is needed. If the new security policy is needed, S1030 is executed. If the new security policy is not needed, the procedure ends.

At S1030, the PE generates the security policy by using a first model. The first model is a deep forest model.

At S1040, the PE sends the security policy to the PA.

At S1050, the PA forwards the security policy to the PEP.

At S1060, the PEP sends the security policy to the UE.

Through the above procedure, the PE can be triggered to initiate updating of the security policy when the service of the UE changes. In addition, the PEP and the UE can obtain the same security policy, and subsequently the PEP and the UE can perform security protection based on the same security policy and security function. For example, the PEP and the UE may use the same physical layer key mechanism for secure transmission protection.

### Example 2

The solution of Example 1 is applicable to the architecture illustrated in FIG. 9.

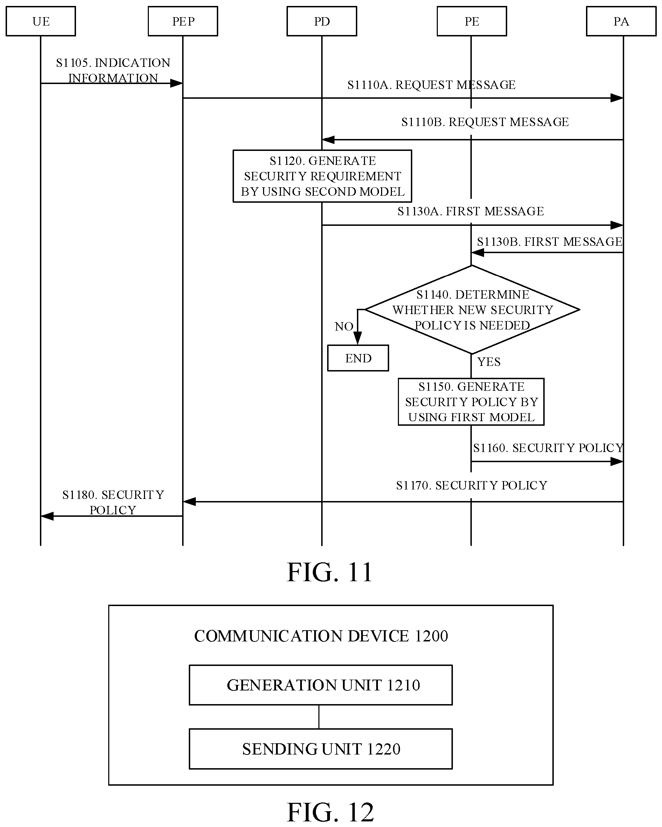

Referring to FIG. 11, at S1110, a PEP sends a request message to a PD. Before sending the request message, the PEP may determine whether a service of a terminal device changes. When the service of the terminal device changes, the PEP sends the request message to the PD, where the request message is used for requesting a security policy.

In some implementations, S1110 may include S1110a and S1110b. At S1110a, the PEP sends the request message to a PA. At S1110b, the PA forwards the request message to the PD.

In some implementations, before S1110, the method illustrated in FIG. 11 further includes S1105. At S1105, the PEP may receive indication information from a UE, where the indication information indicates that a service of the UE changes.

At S1120, the PD generates a security requirement by using a second model. The second model may be a deep forest model.

At S1130, the PD sends a first message to a PE, where the first message includes the security requirement.

In some implementations, S1130 may include S1130a and S1130b. At S1130a, the PD sends the first message to the PA. At S1130b, the PA forwards the first message to the PE.

At S1140, the PE determines whether a new security policy is needed. If the new security policy is needed, S1150 is executed. If the new security policy is not needed, the procedure ends.

At S1150, the PE generates the security policy by using a first model. The first model is a deep forest model. An input parameter of the first model may include the security requirement generated by the PD.

At S1160, the PE sends the security policy to the PA.

At S1170, the PA forwards the security policy to the PEP.

At S1180, the PEP sends the security policy to the UE.

The difference between Example 2 and Example 2 is that in Example 2, the security requirement is generated by the PD. By generating the security requirement through the PD, flexibility of security policy generation can be improved.

Through the above procedure, the PE can be triggered to initiate updating of the security policy when the service of the UE changes. In addition, the PEP and the UE can obtain the same security policy, and subsequently the PEP and the UE can perform security protection based on the same security policy and security function. For example, the PEP and the UE may use the same physical layer key mechanism for secure transmission protection.

Embodiments of the disclosure are not limited in terms of the training process of the first model and the second model. In some embodiments, the PE may train the first model. Taking the architecture illustrated in FIG. 8 as an example, the PE may request relevant data from a core network-network element, such as a network data analytics function (NWDAF) network element, and the PE may use the relevant data to train the first model. The relevant data may include a security requirement, a security rule, a security posture, a system type, a security capability, and the like. Taking the architecture illustrated in FIG. 9 as an example, the PE may request relevant data from a core network-network element, such as an NWDAF network element, and the PE may use the relevant data to train the first model. The relevant data may include a security requirement, a security rule, a security posture, a system type, a security capability, and the like.

In some embodiments, the PD may train the second model. Taking the architecture illustrated in FIG. 9 as an example, the PD may request relevant data from a core network-network element, such as an NWDAF network element, and the PD may use the relevant data to train the second model. The relevant data may include service data, a dynamic security rule, and a static security rule. The service data may include, for example, network activity data, device behavior data, user interaction data, and security event data.

Three application examples are described below to demonstrate efficient orchestration and implementation of the security policy in the disclosure.

### Scenario 1. Smart Home Scenario

Taking a modern residence as an example, numerous smart home appliances and sensing sensors are deployed to build a complete smart home system. In daily life, the system can respond to needs of residents in real-time. For example, when a resident wakes up in the morning, the system automatically identifies the location and behavior of the resident through sensing technologies, and then automatically adjusts curtains and lights to create the optimal indoor environment for the resident. For another example, daily activities such as fitness exercise status of the resident can be identified through sensing technologies. The system can sense and analyze body movements such as sit-ups or running of the resident in real-time through wireless signals, thereby providing appropriate exercise feedback. For another example, considering that the resident may be away from home for extended periods, the system has an intrusion detection function. When external personnel attempt to enter illegally, the system will analyze collected signal changes through precise sensing of the 6G network, so as to determine the presence of intruders. Once an abnormal situation is confirmed, the system will immediately send an alert to the mobile device of the resident, so as to ensure home property security.

After in-depth analysis of different scenarios, each service scenario has unique security requirements due to its unique characteristics. Whether it is regular home operations, real-time monitoring of user behavior status, or immediate alarm for illegal intrusion, the security challenges and requirements behind have their unique levels and differences. Specific security requirements may be as illustrated in Table 1.

**Table 1**

| Security Dimension | Normal usage scenario | Behavior status monitoring scenario | Intrusion detection scenario |
|---|---|---|---|
| User privacy protection | Prevent illegal access or leakage of user data during transmission and storage | Provide enhanced encryption and anonymization means to protect deeper user data | Prevent illegal access or leakage of user data during transmission and storage |
| Data integrity and authenticity | Ensure that transmitted data is not tampered with or damaged | Ensure that data is not tampered with during transmission and processing | Ensure that data is not tampered with during transmission and processing |
| Device authentication | Only allow authenticated devices and applications to interact with the core network | Only allow authenticated devices and applications to interact with the core network, ensuring secure collaborative operation among multiple sensors and devices | Only allow authenticated devices and applications to interact with the core network, ensuring secure collaborative operation among multiple sensors and devices |
| Key level | Medium | High | High |
| Authorized access | Only authorized users or services can access data and control | Adjust security policies according to user behaviors and scenarios | Ensure that only authorized personnel can access |
| Threat monitoring and response | Continuously monitor for possible network attacks or abnormal traffic behaviors | Define and protect policies for specific behaviors, such as privacy protection when elderly fall | Define and protect policies for specific behaviors and provide real-time alarm, ensuring high priority, real-time transmission and reliability of communication links |
| Remote control and access | - | Users can remotely access the device when they receive an emergency | Users can remotely access the device when they receive an emergency |
| Network isolation and protection | - | - | Isolate the intrusion detection network from other home networks |
| Data accuracy and reliability | - | Data accuracy impacts user health and safety, enhance sensing frequency | Ensure high accuracy and avoid frequent false alarms |

### Scenario 2. Smart Wearable Scenario

Taking a user's life as an example, a smart bracelet, smart shoes, smart glasses, and a smart wristband of the user can all communicate with a network, such as a 6G network, jointly building a complete smart health and fitness management system. When the user starts a new day, the smart bracelet automatically starts. With advanced sensing technologies, the smart bracelet monitors key health indicators such as heart rate, blood pressure, and breathing rate in real-time. As the user begins daily exercise, such as badminton training, the smart shoes can accurately capture motion data such as steps, speed, and jumps. Meanwhile, the smart glasses analyze data on the sports field in real-time through high-speed networks and provide immediate feedback and guidance. When the user encounters an accident during exercise, such as spraining an ankle, the wearable devices immediately sense this abnormality and initiate an emergency mode. The smart bracelet shows the user steps for injury treatment through AR technologies, while a low-frequency electrotherapy pain treatment device built into the smart wristband quickly reduces pain. During this period, all data is transmitted through the network in real-time, thereby ensuring the user receives optimal medical advice and rescue at the first moment.

With widespread application of smart wearable devices in various aspects, services involved are becoming increasingly complex. These services are not only related to the users' daily health and fitness, but also involve emergency medical rescue, sports feedback guidance, and even real-time injury treatment. Each service has its unique data and operation procedures, so security requirements of the services also vary. Daily health monitoring may focus more on data integrity and privacy protection. Sports performance detection focuses more on real-time performance and accuracy of data. AR-based injury treatment needs to ensure data availability and emergency response capabilities. Table 2 illustrates security requirements in three smart wearable device usage scenarios.

**Table 2**

| Security Dimension | Daily monitoring scenario | Sports performance detection scenario | AR-based sports injury rehabilitation assistance scenario |
|---|---|---|---|
| Data collection strategy | Minimum data collection principle | Collect relevant data according to sports type | Collect all necessary data related to injury treatment |
| User privacy protection | Medium, do not collect unnecessary personally identifiable information | Low, do not collect personally identifiable information | High, do not collect unnecessary personally identifiable information |
| Data confidentiality | Encrypted storage and transmission of data | Encrypted storage and transmission of data | Encrypted storage and transmission of data |
| Key level | Medium | Medium | Low |
| Data integrity | Ensure that heart rate, blood pressure, and other data are not tampered with | Prevent motion data such as steps and speed from being tampered with | AR content and treatment recommendations are not tampered with |
| Data authorization | With the user's consent, only authorize the third party to use | With the user's consent, only authorize the third party to use | With the user's consent, only authorize the third party to use |
| Device authentication | Authentication of bracelet, smart glasses, and other devices | Authentication of smart shoes and sports analytics devices | Authentication of AR devices and other related devices |
| User authentication | Ensure that only the user can access motion data | Ensure that only the user can access motion data | - |
| Tamper-proof Mechanism | - | - | Traceability and tamper-proof mechanism for AR applications and treatment data |
| Service priority | Low | Low | High |
| Emergency Response Mechanism | Rapid response to abnormal health data | Real-time URLLC slicing and rapid response to sports injuries or other emergencies | Large bandwidth eMBB slicing and rapid AR guidance response to user injuries |

### Scenario 3. Smart IoT Device Scenario

Smart IoT devices are reflected in multiple scenarios, where a shopping center is a good example. For example, for commodity supply and sales management, 3GPP IoT devices can be deployed on store shelves and storage areas to sense commodity inventory status in real-time and adjust supply and sales strategies accordingly, thereby ensuring supply-demand balance while avoiding inventory backlog. For another example, IoT devices can sense and adapt to changes in pedestrian flow and temperature in the shopping center in real-time. For example, lighting and air conditioning systems can automatically adjust to create a more suitable shopping environment for the public. In addition, energy consumption can be reduced, thereby effectively optimizing operating costs. For another example, in the shopping center, an ambient IoT-driven indoor navigation system is introduced to provide the customer with precise indoor navigation services, thereby easily guiding the customer to parking spaces and destination stores.

The above different scenarios may correspond to different security requirements, as illustrated in Table 3.

**Table 3**

| Security Dimension | 3GPP IoT device supply and sales management | Ambient IoT Energy management | Ambient IoT indoor navigation |
|---|---|---|---|
| Entity authentication | Lightweight device authentication protocol | Ultra-lightweight device authentication protocol | Ultra-lightweight device authentication protocol + user authentication |
| Privacy protection | - | - | Prevent location tracking, encrypt location data, and anonymize location |
| Data confidentiality | Encrypted transmission of inventory data | Encryption of atrium environment data | Encryption of user location information |
| Data integrity | Ensure data integrity | Ensure data integrity | Ensure data integrity |
| Data source authentication | Data source verification | Data source verification | - |
| Communication confidentiality | Encrypted communication between devices | Encrypted communication between devices | Encrypted communication between devices and users |

Method embodiments of the disclosure have been described in detail above with reference to FIGs. 1 to 11. Apparatus embodiments of the disclosure are described in detail below with reference to FIGs. 12 to 15. It should be understood that, descriptions of method embodiments and apparatus embodiments correspond to each other. Therefore, parts not described in detail can be referred to in preceding method embodiments.

FIG. 12 is a schematic block diagram of a communication device provided in embodiments of the disclosure. The communication device 1200 illustrated in FIG. 12 may be any security policy network element described above. The communication device illustrated in FIG. 12 includes a generation unit 1210 and a sending unit 1220.

In some embodiments, the generation unit 1210 and a determination unit may be a processor, and the sending unit 1220 and a receiving unit may be a transceiver. In some implementations, the communication device 1200 may further include a memory. The generation unit 1210 is configured to generate a security policy, where the security policy is associated with a service of a terminal device. The sending unit 1220 is configured to send the security policy to a policy enforcement network element.

In some possible implementations, the generation unit is configured to generate the security policy based on a first model.

In some possible implementations, an input parameter of the first model includes at least one of: a system type corresponding to the service of the terminal device, a security requirement corresponding to the service of the terminal device, or a security capability corresponding to the service of the terminal device.

In some possible implementations, the security capability includes multiple sub-capabilities, the security policy includes multiple sub-policies, and the multiple sub-policies are in one-to-one correspondence with the multiple sub-capabilities.

In some possible implementations, the security requirement includes multiple sub-requirements in a security requirement list.

In some possible implementations, the input parameter of the first model further includes at least one of: a security rule, a network security posture, or a system security posture.

In some possible implementations, the communication device further includes a receiving unit configured to receive the security requirement from a policy detection network element.

In some possible implementations, the security requirement is generated when the service of the terminal device changes.

In some possible implementations, the security requirement is generated based on a second model.

In some possible implementations, before generating the security policy, the communication device further includes a receiving unit configured to receive a first request message from the policy enforcement network element, where the first request message is used for requesting the security policy, and the first request message is sent when the service of the terminal device changes.

In some possible implementations, the communication device further includes a determination unit, where the determination unit is configured to determine whether the security policy needs to be generated, and the generation unit is configured to generate the security policy when the security policy needs to be generated.

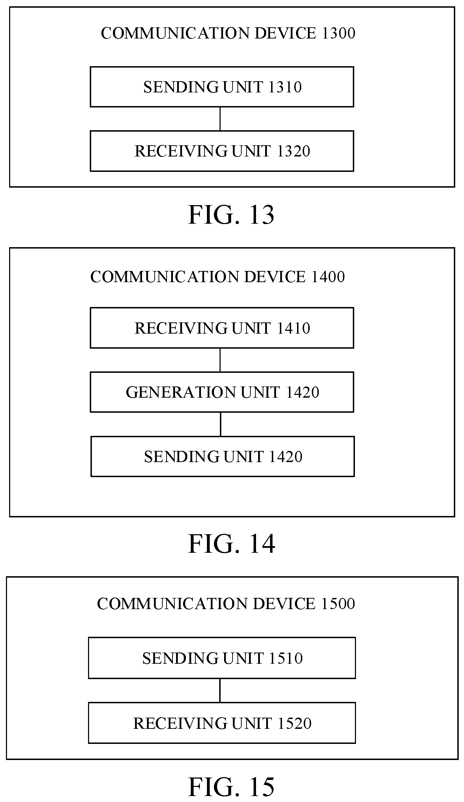

FIG. 13 is a schematic block diagram of a communication device provided in embodiments of the disclosure. The communication device 1300 illustrated in FIG. 13 may be any policy enforcement network element described above. The communication device illustrated in FIG. 13 includes a sending unit 1310 and a receiving unit 1320.

In some embodiments, the sending unit 1310 and the receiving unit 1320 may be a transceiver. In some implementations, the communication device 1300 may further include a memory and a processor. The sending unit 1310 is configured to send a first request message to a first network element, where the first request message is used for requesting a security policy, the security policy is associated with a service of a terminal device, and the first network element includes a security policy network element and/or a policy detection network element. The receiving unit 1320 is configured to receive the security policy from the security policy network element.

In some possible implementations, the security policy is generated based on a first model.

In some possible implementations, an input parameter of the first model includes at least one of: a system type corresponding to the service of the terminal device, a security requirement corresponding to the service of the terminal device, or a security capability corresponding to the service of the terminal device.

In some possible implementations, the security capability includes multiple sub-capabilities, the security policy includes multiple sub-policies, and the multiple sub-policies are in one-to-one correspondence with the multiple sub-capabilities.

In some possible implementations, the security requirement includes multiple sub-requirements in a security requirement list.

In some possible implementations, the input parameter of the first model further includes at least one of: a security rule, a network security posture, or a system security posture.

In some possible implementations, the security requirement is sent from the policy detection network element to the security policy network element.

In some possible implementations, the security requirement is generated when the service of the terminal device changes.

In some possible implementations, the security requirement is generated based on a second model.

In some possible implementations, before sending the first request message to the first network element, the receiving unit is further configured to receive first indication information from the terminal device, where the first indication information indicates that the service of the terminal device changes.

FIG. 14 is a schematic block diagram of a communication device provided in embodiments of the disclosure. The communication device 1400 illustrated in FIG. 14 may be any policy detection network element described above. The communication device illustrated in FIG. 14 includes a receiving unit 1410, a generation unit 1420, and a sending unit 1430.

In some embodiments, the receiving unit 1410 and the sending unit 1430 may be a transceiver, and the generation unit 1420 may be a processor. In some implementations, the communication device 1400 may further include a memory. The receiving unit 1410 is configured to receive a first request message from a policy enforcement network element, where the first request message is used for requesting a security policy. The generation unit 1420 is configured to generate, in response to the first request message, a security requirement corresponding to a service of a terminal device. The sending unit 1430 is configured to send the security requirement to a security policy network element, where the security requirement is used for the security policy network element to generate the security policy.

In some possible implementations, the security policy is generated based on a first model.

In some possible implementations, an input parameter of the first model includes at least one of: a system type corresponding to the service of the terminal device, the security requirement, or a security capability corresponding to the service of the terminal device.

In some possible implementations, the security capability includes multiple sub-capabilities, the security policy includes multiple sub-policies, and the multiple sub-policies are in one-to-one correspondence with the multiple sub-capabilities.

In some possible implementations, the security requirement includes multiple sub-requirements in a security requirement list.

In some possible implementations, the security requirement is generated based on a second model.

FIG. 15 is a schematic block diagram of a communication device provided in embodiments of the disclosure. The communication device 1500 illustrated in FIG. 15 may be any terminal device described above. The communication device illustrated in FIG. 15 includes a sending unit 1510 and a receiving unit 1520. In some embodiments, the sending unit 1510 and the receiving unit 1520 may be a transceiver. In some implementations, the communication device 1500 may further include a memory and a processor. The sending unit 1510 is configured to send first indication information to a policy enforcement network element, where the first indication information indicates that a service of the terminal device changes. The receiving unit 1520 is configured to receive a security policy from the policy enforcement network element, where the security policy is associated with the service of the terminal device.

In some possible implementations, the security policy is generated based on a first model.

In some possible implementations, an input parameter of the first model includes at least one of: a system type corresponding to the service of the terminal device, a security requirement corresponding to the service of the terminal device, or a security capability corresponding to the service of the terminal device.

In some possible implementations, the security capability includes multiple sub-capabilities, the security policy includes multiple sub-policies, and the multiple sub-policies are in one-to-one correspondence with the multiple sub-capabilities.

In some possible implementations, the security requirement belongs to multiple sub-requirements in a security requirement list.

In some possible implementations, the input parameter of the first model further includes at least one of: a security rule, a network security posture, or a system security posture.

In some possible implementations, the security requirement is sent from a policy detection network element to the security policy network element.

In some possible implementations, the security requirement is generated when the service of the terminal device changes.

In some possible implementations, the security requirement is generated based on a second model.

In various embodiments of the disclosure, the magnitude of a sequence number of each process does not mean an order of execution, and the order of execution of each process should be determined by its function and an internal logic and shall not constitute any limitation to the implementation of the embodiments of the disclosure.

It will be appreciated that the systems, apparatuses, and methods disclosed in embodiments of the disclosure may also be implemented in various other manners. For example, the above apparatus embodiments are merely illustrative, e.g., the division of units is only a division of logical functions, and other manners of division may be available in practice, e.g., multiple units or assemblies may be combined or may be integrated into another system, or some features may be ignored or skipped. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components displayed as units may or may not be physical units, and may reside at one location or may be distributed to multiple networked units. Some or all of the units may be selectively adopted according to practical needs to achieve desired objectives of the disclosure.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some the above embodiments can be implemented in the form of a computer program product. The computer program product includes one or more computer instructions. When the computer instructions are applied and executed on a computer, all or some the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The foregoing elaborations are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A method for security policy generation, comprising:
generating, by a security policy network element, a security policy, wherein the security policy is associated with a service of a terminal device; and
sending, by the security policy network element, the security policy to a policy enforcement network element.

2. The method of claim 1, wherein generating, by the security policy network element, the security policy comprises:
generating, by the security policy network element, the security policy based on a first model.

3. The method of claim 2, wherein an input parameter of the first model comprises at least one of: a system type corresponding to the service of the terminal device, a security requirement corresponding to the service of the terminal device, or a security capability corresponding to the service of the terminal device.

4. The method of claim 3, wherein the security capability comprises a plurality of sub-capabilities, the security policy comprises a plurality of sub-policies, and the plurality of sub-policies are in one-to-one correspondence with the plurality of sub-capabilities.

5. The method of claim 3 or 4, wherein the security requirement comprises a plurality of sub-requirements in a security requirement list.

6. The method of any one of claims 3 to 5, wherein the input parameter of the first model further comprises at least one of: a security rule, a network security posture, or a system security posture.

7. The method of claim 3 or 4, further comprising:
receiving, by the security policy network element, the security requirement from a policy detection network element.

8. The method of claim 7, wherein the security requirement is generated when the service of the terminal device changes.

9. The method of claim 8, wherein the security requirement is generated based on a second model.

10. The method of any one of claims 1 to 9, wherein before generating, by the security policy network element, the security policy, the method further comprises:
receiving, by the security policy network element, a first request message from the policy enforcement network element, wherein the first request message is used for requesting the security policy, and the first request message is sent when the service of the terminal device changes.

11. The method of any one of claims 1 to 10, wherein before generating, by the security policy network element, the security policy, the method further comprises:
determining, by the security policy network element, whether the security policy needs to be generated, and
generating, by the security policy network element, the security policy comprises:
generating, by the security policy network element, the security policy when the security policy needs to be generated.

12. A method for security policy generation, comprising:
sending, by a policy enforcement network element, a first request message to a first network element, wherein the first request message is used for requesting a security policy, the security policy is associated with a service of a terminal device, and the first network element comprises a security policy network element and/or a policy detection network element; and
receiving, by the policy enforcement network element, the security policy from the security policy network element.

13. The method of claim 12, wherein the security policy is generated based on a first model.

14. The method of claim 13, wherein an input parameter of the first model comprises at least one of: a system type corresponding to the service of the terminal device, a security requirement corresponding to the service of the terminal device, or a security capability corresponding to the service of the terminal device.

15. The method of claim 14, wherein the security capability comprises a plurality of sub-capabilities, the security policy comprises a plurality of sub-policies, and the plurality of sub-policies are in one-to-one correspondence with the plurality of sub-capabilities.

16. The method of claim 14 or 15, wherein the security requirement comprises a plurality of sub-requirements in a security requirement list.

17. The method of any one of claims 14 to 16, wherein the input parameter of the first model further comprises at least one of: a security rule, a network security posture, or a system security posture.

18. The method of claim 14 or 15, wherein the security requirement is sent from the policy detection network element to the security policy network element.

19. The method of claim 18, wherein the security requirement is generated when the service of the terminal device changes.

20. The method of claim 18 or 19, wherein the security requirement is generated based on a second model.

21. The method of any one of claims 12 to 20, wherein before sending, by the policy enforcement network element, the first request message to the first network element, the method further comprises:
receiving, by the policy enforcement network element, first indication information from the terminal device, wherein the first indication information indicates that the service of the terminal device changes.

22. A method for security policy generation, comprising:
receiving, by a policy detection network element, a first request message from a policy enforcement network element, wherein the first request message is used for requesting a security policy;
generating, by the policy detection network element, in response to the first request message, a security requirement corresponding to a service of a terminal device; and
sending, by the policy detection network element, the security requirement to a security policy network element, wherein the security requirement is used for the security policy network element to generate the security policy.

23. The method of claim 22, wherein the security policy is generated based on a first model.

24. The method of claim 23, wherein an input parameter of the first model comprises at least one of: a system type corresponding to the service of the terminal device, the security requirement, or a security capability corresponding to the service of the terminal device.

25. The method of claim 24, wherein the security capability comprises a plurality of sub-capabilities, the security policy comprises a plurality of sub-policies, and the plurality of sub-policies are in one-to-one correspondence with the plurality of sub-capabilities.

26. The method of claim 24 or 25, wherein the security requirement comprises a plurality of sub-requirements in a security requirement list.

27. The method of any one of claims 22 to 26, wherein the security requirement is generated based on a second model.

28. A method for security policy generation, comprising:
sending, by a terminal device, first indication information to a policy enforcement network element, wherein the first indication information indicates that a service of the terminal device changes; and
receiving, by the terminal device, a security policy from the policy enforcement network element, wherein the security policy is associated with the service of the terminal device.

29. The method of claim 28, wherein the security policy is generated based on a first model.

30. The method of claim 29, wherein an input parameter of the first model comprises at least one of: a system type corresponding to the service of the terminal device, a security requirement corresponding to the service of the terminal device, or a security capability corresponding to the service of the terminal device.

31. The method of claim 30, wherein the security capability comprises a plurality of sub-capabilities, the security policy comprises a plurality of sub-policies, and the plurality of sub-policies are in one-to-one correspondence with the plurality of sub-capabilities.

32. The method of claim 30, wherein the security requirement belongs to a plurality of sub-requirements in a security requirement list.

33. The method of any one of claims 30 to 32, wherein the input parameter of the first model further comprises at least one of: a security rule, a network security posture, or a system security posture.

34. The method of claim 30 or 31, wherein the security requirement is sent from a policy detection network element to the security policy network element.

35. The method of claim 34, wherein the security requirement is generated when the service of the terminal device changes.

36. The method of claim 35, wherein the security requirement is generated based on a second model.

37. A communication device, being a security policy network element and comprising:
a generation unit configured to generate a security policy, wherein the security policy is associated with a service of a terminal device; and
a sending unit configured to send the security policy to a policy enforcement network element.

38. The communication device of claim 37, wherein the generation unit is configured to generate the security policy based on a first model.

39. The communication device of claim 38, wherein an input parameter of the first model comprises at least one of: a system type corresponding to the service of the terminal device, a security requirement corresponding to the service of the terminal device, or a security capability corresponding to the service of the terminal device.

40. The communication device of claim 39, wherein the security capability comprises a plurality of sub-capabilities, the security policy comprises a plurality of sub-policies, and the plurality of sub-policies are in one-to-one correspondence with the plurality of sub-capabilities.

41. The communication device of claim 39 or 40, wherein the security requirement comprises a plurality of sub-requirements in a security requirement list.

42. The communication device of any one of claims 39 to 41, wherein the input parameter of the first model further comprises at least one of: a security rule, a network security posture, or a system security posture.

43. The communication device of claim 39 or 40, further comprising:
a receiving unit configured to receive the security requirement from a policy detection network element.

44. The communication device of claim 43, wherein the security requirement is generated when the service of the terminal device changes.

45. The communication device of claim 44, wherein the security requirement is generated based on a second model.

46. The communication device of any one of claims 37 to 45, wherein before generating the security policy, the communication device further comprises:
a receiving unit configured to receive a first request message from the policy enforcement network element, wherein the first request message is used for requesting the security policy, and the first request message is sent when the service of the terminal device changes.

47. The communication device of any one of claims 37 to 46, further comprising:
a determination unit configured to determine whether the security policy needs to be generated, and
wherein the generation unit is configured to generate the security policy when the security policy needs to be generated.

48. A communication device, being a policy enforcement network element and comprising:
a sending unit configured to send a first request message to a first network element, wherein the first request message is used for requesting a security policy, the security policy is associated with a service of a terminal device, and the first network element comprises a security policy network element and/or a policy detection network element; and
a receiving unit configured to receive the security policy from the security policy network element.

49. The communication device of claim 48, wherein the security policy is generated based on a first model.

50. The communication device of claim 49, wherein an input parameter of the first model comprises at least one of: a system type corresponding to the service of the terminal device, a security requirement corresponding to the service of the terminal device, or a security capability corresponding to the service of the terminal device.

51. The communication device of claim 50, wherein the security capability comprises a plurality of sub-capabilities, the security policy comprises a plurality of sub-policies, and the plurality of sub-policies are in one-to-one correspondence with the plurality of sub-capabilities.

52. The communication device of claim 50 or 51, wherein the security requirement comprises a plurality of sub-requirements in a security requirement list.

53. The communication device of any one of claims 50 to 52, wherein the input parameter of the first model further comprises at least one of: a security rule, a network security posture, or a system security posture.

54. The communication device of claim 50 or 51, wherein the security requirement is sent from the policy detection network element to the security policy network element.

55. The communication device of claim 54, wherein the security requirement is generated when the service of the terminal device changes.

56. The communication device of claim 54 or 55, wherein the security requirement is generated based on a second model.

57. The communication device of any one of claims 48 to 56, wherein before sending the first request message to the first network element, the receiving unit is further configured to:
receive first indication information from the terminal device, wherein the first indication information indicates that the service of the terminal device changes.

58. A communication device, being a policy detection network element and comprising:
a receiving unit configured to receive a first request message from a policy enforcement network element, wherein the first request message is used for requesting a security policy;
a generation unit configured to generate, in response to the first request message, a security requirement corresponding to a service of a terminal device; and
a sending unit configured to send the security requirement to a security policy network element, wherein the security requirement is used for the security policy network element to generate the security policy.

59. The communication device of claim 58, wherein the security policy is generated based on a first model.

60. The communication device of claim 59, wherein an input parameter of the first model comprises at least one of: a system type corresponding to the service of the terminal device, the security requirement, or a security capability corresponding to the service of the terminal device.

61. The communication device of claim 60, wherein the security capability comprises a plurality of sub-capabilities, the security policy comprises a plurality of sub-policies, and the plurality of sub-policies are in one-to-one correspondence with the plurality of sub-capabilities.

62. The communication device of claim 60 or 61, wherein the security requirement comprises a plurality of sub-requirements in a security requirement list.

63. The communication device of any one of claims 58 to 62, wherein the security requirement is generated based on a second model.

64. A communication device, being a terminal device and comprising:
a sending unit configured to send first indication information to a policy enforcement network element, wherein the first indication information indicates that a service of the terminal device changes; and
a receiving unit configured to receive a security policy from the policy enforcement network element, wherein the security policy is associated with the service of the terminal device.

65. The communication device of claim 64, wherein the security policy is generated based on a first model.

66. The communication device of claim 65, wherein an input parameter of the first model comprises at least one of: a system type corresponding to the service of the terminal device, a security requirement corresponding to the service of the terminal device, or a security capability corresponding to the service of the terminal device.

67. The communication device of claim 66, wherein the security capability comprises a plurality of sub-capabilities, the security policy comprises a plurality of sub-policies, and the plurality of sub-policies are in one-to-one correspondence with the plurality of sub-capabilities.

68. The communication device of claim 66, wherein the security requirement belongs to a plurality of sub-requirements in a security requirement list.

69. The communication device of any one of claims 66 to 68, wherein the input parameter of the first model further comprises at least one of: a security rule, a network security posture, or a system security posture.

70. The communication device of claim 66 or 67, wherein the security requirement is sent from a policy detection network element to the security policy network element.

71. The communication device of claim 70, wherein the security requirement is generated when the service of the terminal device changes.

72. The communication device of claim 71, wherein the security requirement is generated based on a second model.
